# EUROPEAN PATENT APPLICATION

(11) **EP 4 535 502 A1**
(43) Date of publication of application: **09.04.2025**
(21) Application number: 24201187.2
(22) Date of filing: 18.09.2024
(51) Int. Cl.: H01M 10/42, H01M 10/48, H04B 5/72, H01Q 1/42, H01Q 15/00

(54) **BATTERY CELL SUITABLE FOR WIRELESS COMMUNICATION OF DATA SIGNALS, THE BATTERY COMPRISING AT LEAST ONE CELL**

(30) Priority: 06.10.2023 EP 23202113
(71) Applicant: Belenos Clean Power Holding AG, 2502 Bienne (CH)
(72) Inventor: FRANCESCUTTO, Gianni, 2504 Bienne (CH); LECHENNE, Alexandre, 2608 Courtelary (CH)
(74) Representative: ICB SA

(57) **Abstract**

A battery comprises at least one battery cell (10, 10'), the cell comprising in a housing structure at least one slave cell management unit (BMS), and at least one communication unit (14) for wireless communication of data or parameter or measurement signals with a communication unit (24) of a master battery management unit (20). The cell comprises combined means in a portion of a wall of the cell housing structure or forming part of an externally or internally configured plate disposed on a wall facing the cell communication unit (14) for enhancing or promoting good reception of radio frequency signals with the master battery management unit (20).

## Description

### Technical scope of the invention

The present invention relates to a battery cell, which is adapted for wireless communication of data signals with a master management unit of a battery.

The present invention also relates to a battery comprising at least one cell adapted for wireless communication of data signals with a master management unit of the battery.

### Prior art

A battery is made up of a plurality of cells connected in series or in parallel. These cells typically have different characteristics in terms of production, temperature distribution or life curve. In addition, they often have different states of charge, which degrades the battery and reduces its operational efficiency. To optimise the battery's capacity and lifespan, a BMS (Battery Management System) is traditionally used, which is an electronic system for controlling the states of charge of the battery cells. This system balances the charge of the cells by short-circuiting certain cells or redistributing the energy between the cells.

Patent EP 3 605 778 B1 may be cited in this connection, which describes a balancing unit on board a battery cell. The balancing unit comprises means for measuring cell state parameters, wireless communication means for sending and receiving state parameters, and wireless energy transfer means. However, the wireless communication means are generally located within each cell and wireless communication of data to a cell balancing and data management system may encounter obstacles to wireless communication through cell walls, which may affect the successful communication of wireless data signals to be processed by the electronic system.

Patent application EP 3 517 350 A1 describes a wireless battery management system and a battery pack equipped therewith. The wireless battery management system includes a master BMS configured to transmit a first radio frequency (RF) signal including a state detection command over a first wireless channel, and a plurality of slave BMSs coupled to one or more battery modules in one-to-one correspondence. Each of the slave BMSs is configured to detect status information of the battery module to which the corresponding slave BMS is coupled in response to the first RF signal, and transmit a second RF signal indicative of the battery module status information via the first wireless channel. As the transmission of bidirectional messages by wireless data or parameter RF signals takes place through housing walls of each battery pack or battery cell, the transmission of bidirectional messages by RF signals through at least one wall of each cell housing may be reduced or disturbed or interfered with by the material or materials of the walls constituting the housing of each cell.

### Summary of the invention

The invention thus relates to a battery cell, which is adapted for wireless communication of bidirectional messages by data or parameter signals with a master battery management unit. The cell comprises means combined in a portion of a wall of the cell housing and / or forming part of an externally or internally configured plate to enable proper transmission of wireless bidirectional messages by RF data or parameter signals, according to the features of independent claim 1.

Particular forms of the means combined with a wall portion of each battery cell or forming part of an externally or internally configured plate for good wireless bidirectional transmission of RF data or parameter signals are defined in dependent claims 2 to 8.

A further aspect of the invention relates to a battery comprising at least one cell adapted for wireless communication of bidirectional messages by RF data or parameter signals with a battery master management unit or external to the battery, according to the features of independent claim 9.

Particular forms of the battery, which may comprise one or more battery cells connected substantially in series with one another and each comprising means combined with a wall portion of each battery cell and / or forming part of an externally or internally configured plate for the proper wireless transmission of bidirectional messages by RF data or parameter signals, are defined in dependent claims 10 to 17.

### Brief description of the drawings

The purposes, advantages and characteristics of the battery cell, and of the battery with at least one cell comprising means for improving or enabling good reception or transmission of RF wireless data or parameter signals, will become clearer in the following non-limiting description with reference to the drawings, in which:

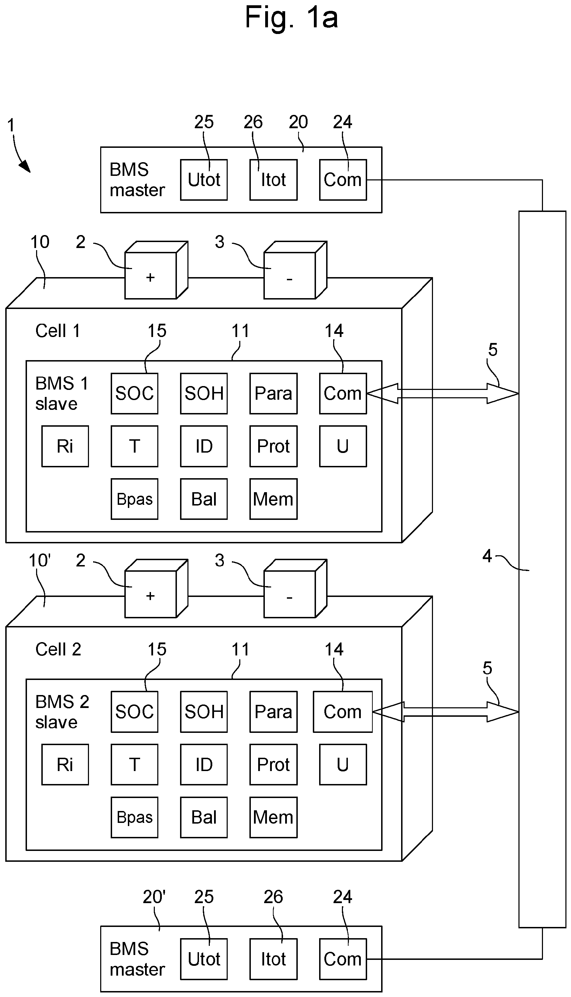

- Figure 1a represents various electrical or electronic components constituting a power supply battery, in particular for a vehicle, which comprises several battery cells adapted for wireless communication of bidirectional messages by RF signals of data or parameters with one or two master battery management units for controlling each cell according to the invention,

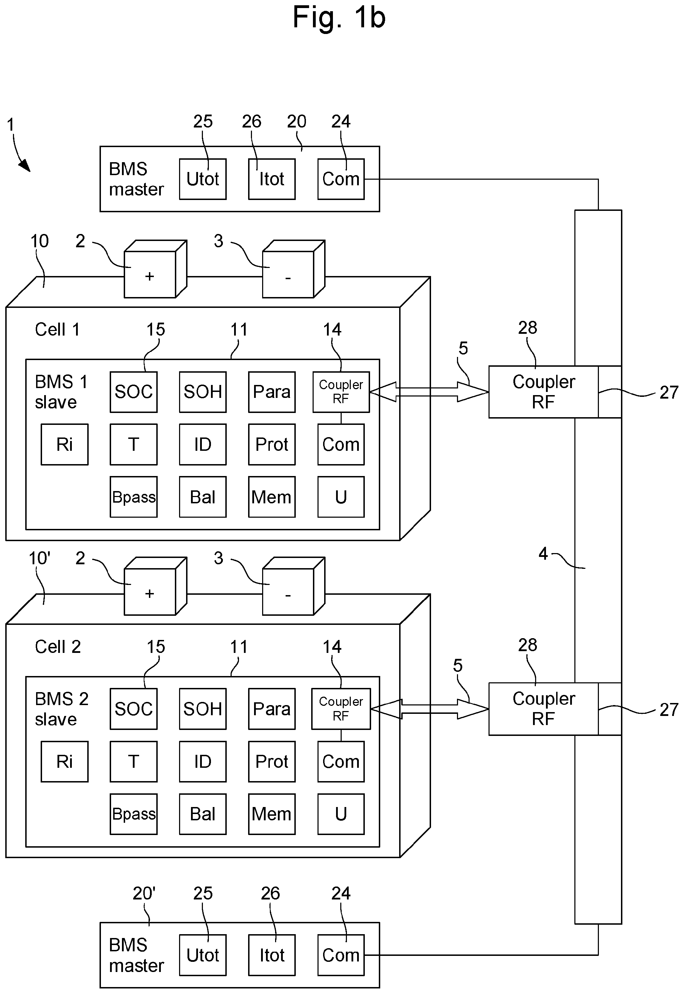

- Figure 1b represents a variant of Figure 1a of various electrical or electronic components constituting a power supply battery, in particular for a vehicle, which comprises several battery cells adapted for wireless communication of bidirectional messages by RF couplers of data or parameters with one or two master control battery management units of each cell according to the invention,

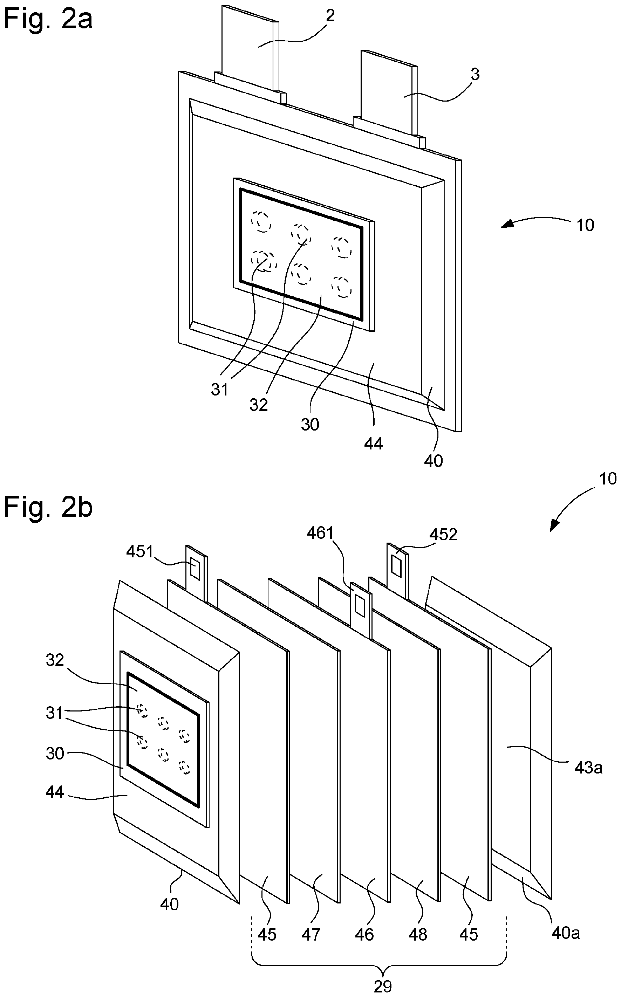

- Figure 2a shows the battery cell having two terminals as present in a first form of execution of the present invention,
- Figure 2b shows an expanded view of the battery cell shown in Figure 2a,

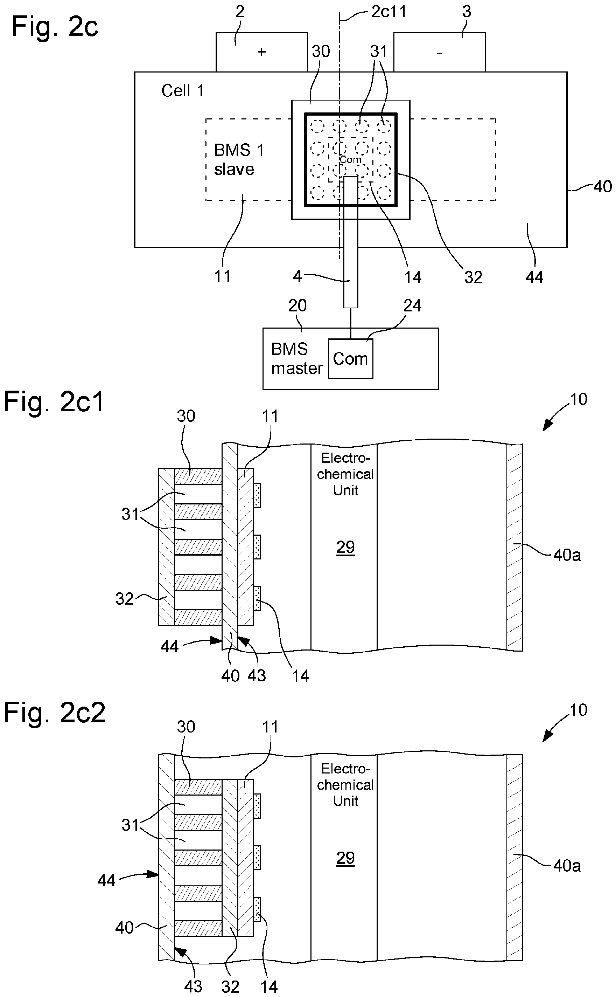

- Figures 2c shows the first form of execution of means of a battery cell; wherein the means represent a plate having through-holes disposed externally on the cell as shown in Figure 2a and as represented according to the present invention to improve the reception or transmission of data or parameter signals and at least one slave cell management unit (slave BMS), and at least one communication unit for wirelessly communicating bidirectional messages by RF couplers of data or parameter or measurement signals with a communication unit of a master battery management system,
- Figure 2c1 represents partial cross-section of the battery cell according to the first form of execution of means as shown in Figure 2c, wherein means forming part of a plate is disposed externally on the cell,
- Figure 2c2 represents a partial cross-section of a variant of the battery cell according to the first form of execution of means as shown in Figure 2c, wherein means forming part of the plate is disposed internally on the cell,
- Figure 3a shows the battery cell having two terminals as present in a second form of execution of the present invention,
- Figure 3b represents an expanded view of the battery cell shown in Figure 3a,
- Figures 3c shows the second form of execution of means of a battery cell; wherein the means represent through-holes made through a wall portion of the battery cell as shown in Figure 3a according to the present invention to improve the reception or transmission of data or parameter signals and at least one slave cell management unit (slave BMS), and at least one communication unit for wirelessly communicating bidirectional messages by RF couplers of data or parameter or measurement signals with a communication unit of a master battery management system,

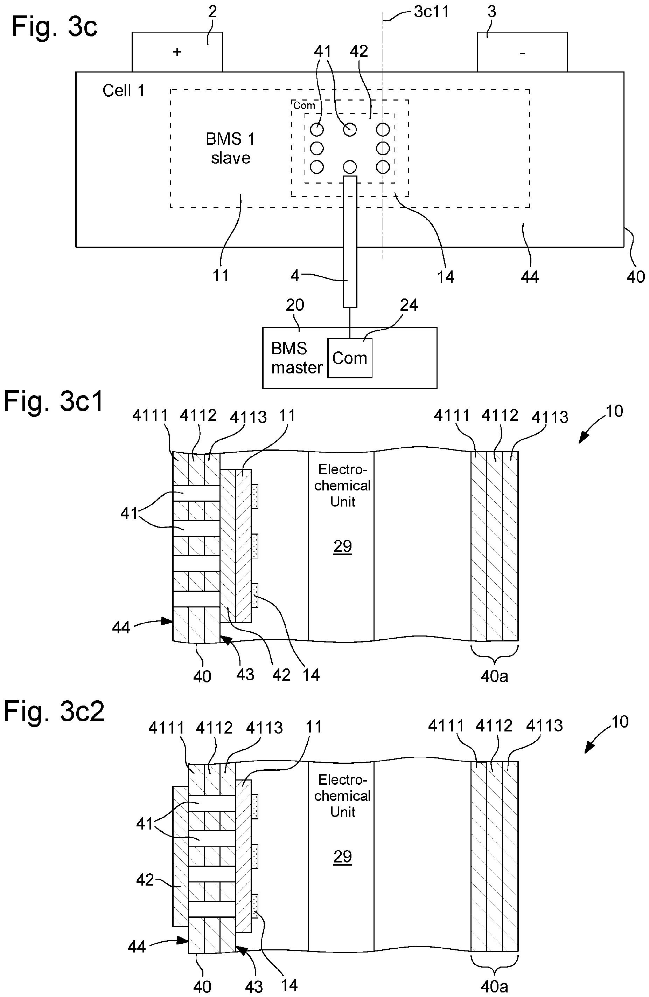

- Figure 3c1 represents partial cross-sections of the battery cell according to the second form of execution of means as shown in Figure 3c, wherein means are combined in the wall portion of the cell housing,
- Figure 3c2 represents a partial cross-section of a variant of the battery cell according to the second form of execution of means as shown in Figure 3c,

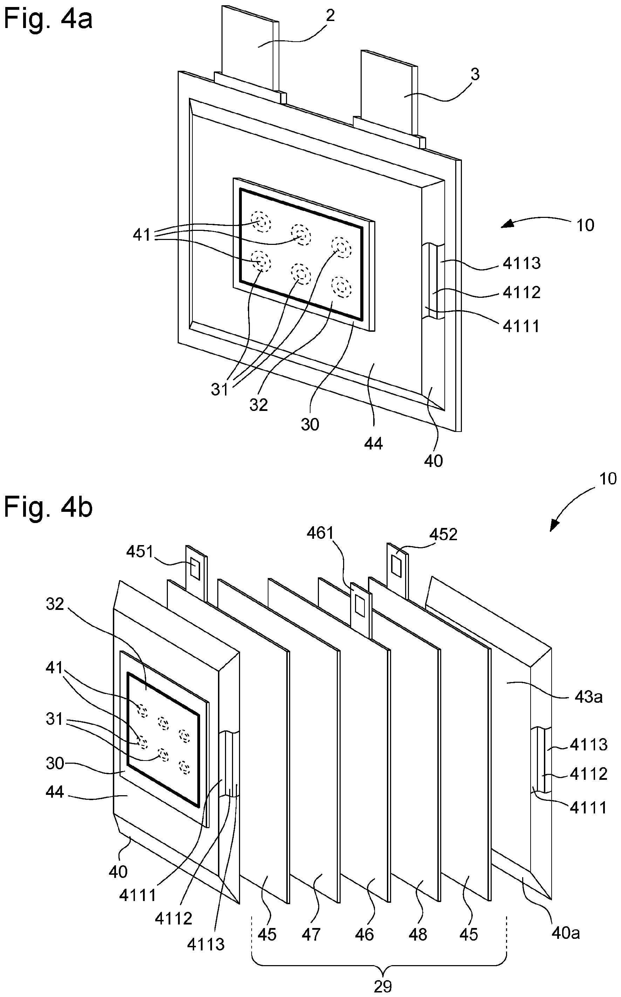

- Figure 4a shows the battery cell having two terminals as present in a third form of execution of the present invention,
- Figure 4b represents an expanded view of the battery cell shown in Figure 4a,

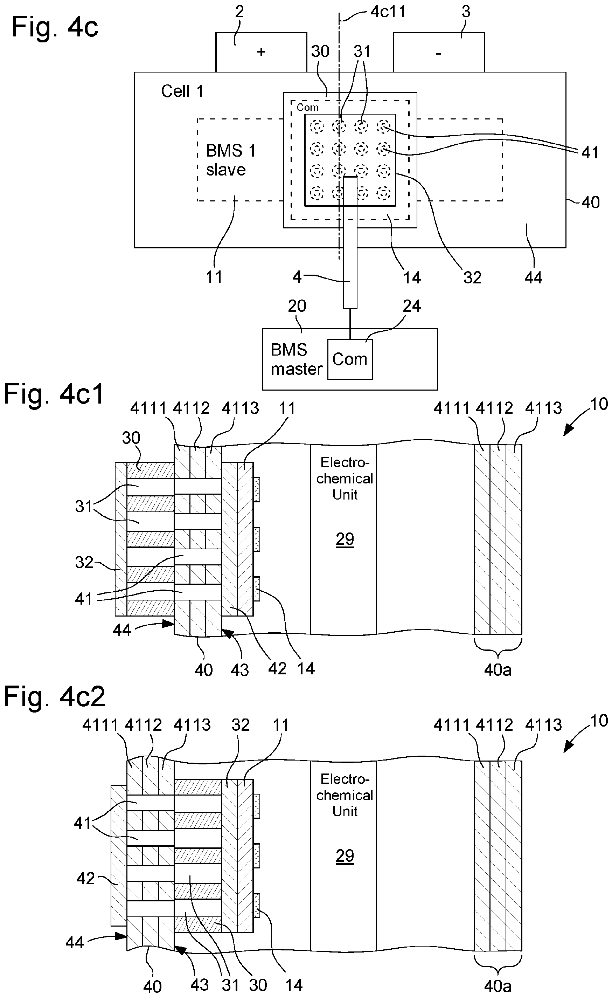

- Figures 4c shows the third form of execution of means of a battery cell; wherein the means represent a plate having through-holes disposed externally on the cell and through-holes made through a wall portion of the battery cell as shown in Figure 4a according to the present invention to improve the reception or transmission of data or parameter signals and at least one slave cell management unit (slave BMS), and at least one communication unit for wirelessly communicating bidirectional messages by RF couplers of data or parameter or measurement signals with a communication unit of a master battery management system,

- Figure 4c1 represents partial cross-sections of the battery cell according to the third form of execution of means as shown in Figure 4c, wherein means are combined in a portion wall of the cell housing and means forming part of a plate is disposed externally on the cell,
- Figure 4c2 represents a partial cross-section of a variant of the battery cell according to the third form of execution of means as shown in Figure 4c, wherein means forming part of the plate is disposed internally on the cell,

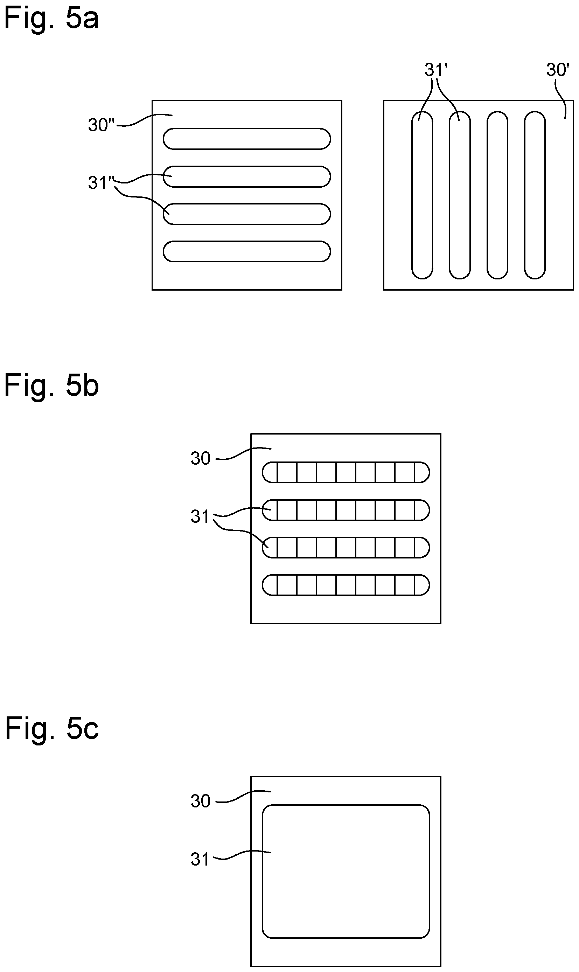

- Figures 5a to 5c show three embodiments of means according to the first and third form of execution mounted on each cell of a battery to improve the reception and transmission of RF data or parameter signals in accordance with the invention.

### Detailed description of the invention

In the following description, reference is made to a battery, generally to a battery for powering a vehicle, which is primarily a car. However, it may also refer to a boat, a submarine, an aircraft, a train, a construction machine or any other vehicle likely to be powered by a battery for its operation or movement.

According to the present invention, the means combined in a portion of a wall of the cell housing and / or forming part of an externally or internally configured plate for improving the transmission of bidirectional messages by RF signals makes it possible to maintain the functionality of the battery. Each of these means are in contact with a layer of polymer, which retains its qualities regarding its long-term impermeability to liquids, double oxygen (O₂) and moisture.

According to the present invention, the means forming part of an externally configured plate implies means combined on the plate, the plate being implemented in a portion of a wall external to the battery cell housing. Likewise, the means forming part of an internally configured plate implies means combined on the plate, the plate being implemented in a portion of a wall internal to the battery cell housing. According to the present invention, the means combined in a portion of a wall of the cell housing implies the means present in a portion of a wall of the cell housing.

It should be noted that different types of battery cells can be utilized. It can be a "pouch" cell. This pouch cell is made with all its electronic or electrical components under vacuum in its housing casing. A second type of cell is the "prismatic" cell, which is a plastic or metallic case containing all the electronic or electrical components. Finally, a third form of the cell is a cell with a cylindrical outer shape, which includes all the electronic components used subsequently also for wireless communication with a master or central battery management unit.

The electrical components for the different types of cells comprise one or more electrochemical units for generation of electrical energy.

Each electrochemical unit comprises electrodes comprising active materials or cathode-active and anode-active materials and electrolytes that are sensitive to moisture and double oxygen (O₂) or air.

Each electrochemical unit or a plurality of units may optionally comprise a protective coating that protects the said unit from moisture and double oxygen (O₂) or air.

The cells further comprise current collectors, terminals or Tabs for transport of electrical energy.

Each cell wall or cell housing wall of the battery cell casing has an internal and an external surface; and each wall can be single or multilayered. Each layer of the cell housing wall comprises a metal or a polymer.

The cell housing walls, having an internal and an external surface, are insulating walls. In particular, the external surfaces of the cell housing walls are typically covered using an insulating material that ensures electrical neutrality to said surfaces. The internal surface may or may not be electrically neutral.

A single layered cell housing wall of the battery cell casing that comprises a metal is typically coated using an insulating material that renders electrical neutrality to the external surface of the cell housing.

The battery comprises in a housing not shown at least one battery cell for providing an electrical supply when charged by a positive and a negative output terminal for operation or movement of a vehicle. For example, in case of pouch cells one or more Tabs present in the electrochemical units of the pouch cell are electrically connected to give rise to the output terminals. In the battery housing, the battery comprises at least one battery cell. However, such a battery may comprise a plurality of battery cells, which are preferably connected in series with each other so that all the cells provide the supply voltage to a positive and a negative output terminal of the battery. The cells of the battery may also be connected to each other in parallel, or by a combination of cells connected in parallel and cells connected in series one after the other.

Each battery cell comprises, in a housing structure, one or more electrochemical units comprising an electrolyte, which may be solid, liquid or in gel (or semi-solid) form.

Each cell comprises electronic components as explained below with reference to Figures 1a and 1b, including a cell or battery management unit, and a communication unit, which comprises at least one antenna in Figure 1a or an RF coupler for radio frequency signals (Figure 1b), for example in the near field. The cell communication unit also enables data or parameter or measurement signals, such as the state of charge of the battery, to be transmitted via the same receiving antenna or another transmitting antenna. In this case, it is preferred to use the same antenna for receiving and transmitting wireless data or parameter signals.

In order to effect wireless reception of radio frequency signals for all the battery cells, a cable may be provided connecting on the one hand a master management control unit in the battery for controlling all the battery cells, and on the other hand the cable being disposed in the vicinity of each receiving and transmitting antenna of the battery cells in a near-field configuration so as to communicate wirelessly with each battery cell so as to constitute near-field communication.

The means for improving and promoting good wireless reception and transmission of data or parameter or measurement signals can be achieved by means of a plate pierced with various through-holes, which are directly in contact with at least one layer of polymer. Each layer of polymer is impervious to liquids and impermeable to double oxygen (O₂) and moisture.

Another means for improving and promoting good wireless reception and transmission of data or parameter or measurement signals can be achieved by means of a cell housing directly pierced with various through-holes, which are directly in contact with at least one layer of polymer. Each layer of polymer is impervious to liquids and impermeable to double oxygen (O₂) and moisture.

A further means for improving and promoting good wireless reception and transmission of data or parameter or measurement signals can be achieved by a combination of means of a cell housing directly pierced with various through-holes and by means of a plate pierced with various through-holes. The through-holes on the cell housing and through-holes on the plate are aligned. These aligned through-holes are also directly in contact with at least one layer of polymer, wherein the layer of polymer is impervious to liquids and impermeable to double oxygen (O₂) and moisture.

For each form of execution shown in Figures 2c, 3c and 4c each through-hole and each layer of polymer in direct contact with the through-hole are permeable to the electromagnetic signals necessary for bidirectional communication and through which the RF coupler will be able to exchange its communication signals.

According to the present invention described below, each battery cell comprises means for improving and facilitating the reception of data or parameter signals wirelessly, in particular by proximity radio frequency signals transmitted by the cable disposed in proximity to each battery cell. Several alternative designs are described below with reference to the figures shown to describe the various means used to improve and facilitate the reception of wireless data or parameter signals, as well as the transmission of RF data or parameter signals from each cell to the master management control unit in the battery. However, it may be envisaged not to use the cable in the battery for wireless reception and transmission of data or parameter or measurement signals in particular from each cell in question and the master management control unit.

Generally, the battery comprises several battery cells, these cells are generally connected by their external electrical connection terminals in series one after the other. The voltage of each cell is generally controlled so as to be able to redistribute the electrical charge equally in each cell one after the other so as not to damage the battery.

Figure 1a represents a particular case of a battery 1 which normally comprises at least a first battery cell 10 with a set 11 of different electronic components, which may be connected together or at least be connected to electrical connection terminals 2 and 3 generally opening out from an upper wall of a casing structure of cell 10 for electrical connection with other cells or parts of the battery 1.

The battery 1 also comprises a first battery management unit or system 20, which is responsible for communicating with first cell 10. In the case where the battery 1 comprises several cells, for example two cells 10 and 10', the first master battery management unit may also communicate wirelessly with a second cell 10' of the battery 1 in order to monitor, for example, the state of charge 15 of each cell, various parameters, the temperature, an identifier of each cell or other elements of the cells. Communication between the master defined battery management unit 20 and the slave defined cells 10, 10' provided in the battery 1 is by wireless communication using RF radio frequency signals. Typically, the battery 1 may comprise an electrical cable 4, which is disposed in the battery in the vicinity of each wireless communication unit 14 of cells 10, 10'. As shown in Figure 1a, communication is effected by the transmission of bidirectional wireless messages by data or parameter signals 5 for example via a cable 4 connected at one end to a communication unit 24 of the first master battery management unit 20 and to the communication unit 14 of each cell.

Each cell 10, 10' first wirelessly receives an RF signal transmitted by the first active master battery management unit 20, and according to the request of the active master battery management unit 20, the first cell 10 shown transmits RF signals in response to the active master battery management unit 20 via the connecting cable 4.

In this Figure 1a, battery cells 10, 10' are shown for simplicity only two cells are shown, but several other cells may also be provided. In addition, a second master battery management unit 20' may also be provided, which is placed in a passive state when the first master battery management unit 20 is active. But the two battery management units 20, 20' can wirelessly transmit bidirectional messages by RF signals of data or parameters or measurements wirelessly transmitted by each cell 10, 10' of the battery 1 each by a communication unit 24. In each master battery management unit 20, and redundant master 20', there is provided an electronic component 25 for monitoring the total voltage and total current 26 of the battery.

Figure 1b shows a variant of the battery shown in Figure 1a. RF couplers 28 are arranged along the cable 4 close to each cell 10, 10' of the battery 1, each being connected to the metal wire 27 by an open annular portion of the cable 4. In each circuit 10, 10', an RF coupler 14 is provided in connection with a communication unit for the transmission of bidirectional messages transmitted by RF signals of data or parameter or measurement RF signals 5.

A first form of execution of means of a battery cell for improving and promoting or facilitating the correct transmission of bidirectional messages by RF signals of data or parameter or measurement signals is explained below with reference to Figures 2a - 2c, 2c1 and 2c2.

Figure 2a shows a front side view of first cell 10 as present in the first form of execution of means of the battery cell, which is adapted for wireless communication of bidirectional messages by RF signals of data or parameter signals with a master battery management unit (Figure 2c). First cell 10 comprises first and second cell housing wall 40 and 40a (Fig. 2a - 2c, 2c1, 2c2). Both cell housing walls 40 and 40a has an external and an internal surface. Terminals 2 and 3 are output terminals of the battery cell and establish electrical connections.

First wall 40 of first cell 10 comprises means 30, 31 wherein through-holes 31 are pierced on insulating plate 30 to enable proper transmission of wireless bidirectional messages by RF signals of data or parameter signals. Plate 30 having through-holes 31 are attached to external surface 44 of first cell housing wall 40. Through-holes 31 are in direct contact with layer of polymer 32 (Fig. 2a - 2c, 2c1, 2c2). Dotted lines (Figure 2a - 2c) indicate that through-holes 31 are located behind layer of polymer 32.

Figure 2b shows an expanded view of first cell 10 shown in Figure 2a. First cell 10 comprises first and second cell housing wall 40 and 40a respectively. Cell wall 40 has internal and external surfaces 43 and 44 respectively (Figures 2a - 2c, 2c1 and 2c2). Cell wall 40a has internal and external surface 43a (Figure 2b) and 44a (not shown) respectively.

First cell 10 further comprises two first electrodes 45 sandwiching second electrode 46, first separator 47 and second separator 48. Tabs 451 and 452 are present on first electrodes 45. Second electrode 46 has Tab 461.

Two first electrodes 45, second electrode 46 and first and second separators 47, 48 are assembled according to the state of the art. Tabs 451, 452, and 461 are present for electrical connections. This assembly of electrodes and separators is electrochemical unit 29 and comprises electrolyte not shown in Figure 2b. Termimal 2 of first cell 10 shown in Figure 2a is obtained by contacting Tabs 451 and 452 (Figure 2b). Terminal 3 shown in Figure 2a is Tab 461 as shown in Figure 2b.

Electrochemical unit 29 is hermetically sealed from the external environment under vacuum using first and second housing wall 40, 40a.

Cell housing wall 40, 40a may be single or multilayered.

Cell housing wall 40 may comprise a polymer wherein the polymer can be selected from a group comprising polypropylene, polyethylenterephthalat or polytetrafluoroethylene. Cell housing wall 40 may also partially comprise a metal wherein the metal can be selected from a group comprising aluminum, steel. Areas of cell housing wall 40 comprising the metal may comprise additional insulating layers for rendering electrical neutrality to the entire cell housing wall 40.

Figure 2c represents the first form of execution of means 30, 31 for improving and promoting or facilitating the correct transmission of bidirectional messages by RF signals of data or parameter or measurement signals from first cell 10 following signals previously transmitted by first master battery management unit 20. The signals transmitted by first master battery management unit 20 were transmitted to first cell 10 either directly wirelessly or via cable 4 with couplers 28 (Figure 1b) arranged opposite each antenna (not shown) of the communication unit (COM) of first cell 10 or of second cell 10' shown in particular in Figure 1b.

The means for improving and promoting good wireless reception and transmission of data or parameter or measurement signals can be achieved by means of plate 30 pierced with various through-holes 31 that are in direct contact with layer of polymer 32. Layer of polymer 32 is impervious to liquids, double oxygen (O₂) and moisture and give access to the not shown communication antenna of first cell 10, which is generally located in the housing structure of first cell 10. The antenna of communication unit 14 of first cell 10 may be adapted to receive transmitted signals first. Through-holes of various shapes or the like may be of the same or varying size.

This first cell 10 comprises wireless communication unit 14, which is generally integrated into the cell housing structure or is located inside the cell. The communication unit may be linked directly to an RF coupler in the communication unit, which typically comprises an antenna not shown, which may be used for both the reception and wireless transmission of RF radio frequency signals towards the first master battery management unit 20.

As shown in this Figure 2c, the RF signals transmitted by first master battery management unit 20 pass through cable 4 so as to approach the communication unit of first cell 10 (Cell 1) or other cells. Cable 4 is arranged to wirelessly transmit bidirectional messages by RF signals of data or parameters or measurements at plate 30 pierced with through-holes 31 arranged between the transmission of the wireless signals from first master battery management unit 20 and wireless communication unit 14 of first cell 10. Communication unit (COM) is indicated using dotted lines, implying the unit being present inside the cell.

Much more generically, the means for improving and promoting good reception of wireless radiofrequency signals with wireless communication unit 14 of first cell 10 consists in providing for the making of through-holes 31 at the location of the antenna (not shown), which may be an antenna made on a printed circuit, of communication unit 14 of first cell 10.

First cell 10 (Cell 1) comprises insulating cell walls 40 (Figures 2a - 2c, 2c1 and 2c2) and 40a (Figures 2b, 2c1, 2c2) insulating the housing structure, enabling signals to be sent and received correctly. Wireless communication unit 14 of set 11 of different electronic components of first cell 10, also comprises an insulating housing structure, enabling signals to be sent and received correctly.

In this first form of execution of means, through-holes 31 are mainly made through plate 30 made of an insulating material and fixed to an insulating wall portion facing wireless communication unit (COM) 14. Through-holes 31 pierced on plate 30 are in direct contact with layer of polymer 32 (Figure 2a - 2c, 2c1, 2c2).

Insulating plate 30 may comprise a polymer and which can be selected from a group comprising polypropylene, high density polyethylene or polytetrafluoroethylene.

Layer of polymer 32 can be selected from a group comprising polypropylene, polyethylenterephthalat or polytetrafluoroethylene. Layer of polymer 32 in direct contact with through-holes 31 can be joined to plate 30 using a means of attachment such as a glue or welding means.

Plate 30 can be attached to external 44 or internal 43 surface of first cell housing wall 40 of first cell 10 using a means of attachment such as a glue or welding means.

In a variant of the first form of execution, insulating wall 40 and 40a may be single or multilayered.

In another variant of the first form of execution, layer of polymer 32 in direct contact with through-holes 31 may be absent.

Dotted line 2c11 in Figures 2c represents a line along which a section is cut so as to represent the cross section of the cell (Cell 1) and in particular the various means 30 and 31 for improving and promoting or facilitating the correct transmission of bidirectional messages.

The cross-sections of Cell 1 along line 2c11 are presented in Figures 2c1 and 2c2. Whereas Figures 2c represent a top view of a cell wall 40 of first cell 10 having the means for improving and promoting or facilitating the correct transmission of bidirectional messages, Figures 2c1 and 2c2 show cross-sections of first cell 10 cut along lines 2c11 rotated by 90°.

Figure 2c1 represents the cross-section of the battery cell 10 shown in Figure 2c. Electrochemical unit 29 (Electrochemical Unit) of the cell 10 is present inside first cell 10 between first and second cell housing wall 40 and 40a. The figure shows plate 30 having through-holes 31 present at external surface 44 of first cell housing wall 40. Plate 30 is sandwiched between polymer layer 32 and external surface 44 of first cell 10. Through-holes 31 on plate 30 are in direct contact with layer of polymer 32. Set 11 of different electronic components having wireless communication unit 14 is present directly at internal surface 43 of the first cell housing wall 40.

Figure 2c2 represents a partial cross-section of a variant of the battery cell according to the first form of execution of means as shown in Figure 2c, wherein means forming part of a plate is disposed on internal surface 43 of first cell housing wall 40. Figure 2c2 is different from Figure 2c1 in that the Figure 2c2 shows plate 30 having through-holes 31 present on internal surface 43 of first cell housing wall 40. Polymer layer 32 is sandwiched between plate 30 and set 11 of different electronic components having a wireless communication unit 14.

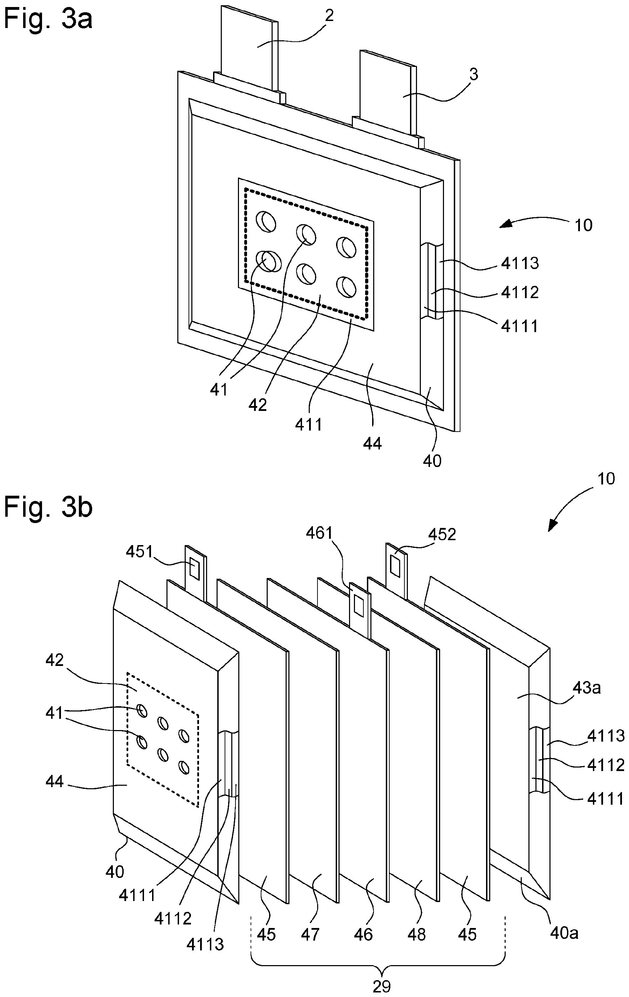

A second form of execution of means of a battery cell battery cell for improving and promoting or facilitating the correct transmission of bidirectional messages by RF signals of data or parameter or measurement signals is explained below with reference to Figures 3a - 3c, 3c1 and 3c2.

Figure 3a shows a front side view of first cell 10 as presented in the second form of execution of means of the battery cell, which is adapted for wireless communication of bidirectional messages by RF signals of data or parameter signals with a master battery management unit. Figure 3a differs from Figure 2a in that first wall 40 of first cell 10 is multilayered and comprises means 41 (through-holes 41) that are pierced on wall portion 411 of cell housing wall 40 to enable proper transmission of wireless bidirectional messages by RF data or parameter signals. Figure 3a also differs from Figure 2a in that plate 30 having through-holes 31 is not utilized, instead, through-holes 41 are made directly on first cell housing wall 40.

Cell housing wall 40 and 40a comprise three layers 4111, 4112 and 4113. Through-holes 41 on first cell housing wall 40 traverse through all layers 4111, 4112 and 4113 of cell wall 40. Through-holes 41 are in direct contact with layer of polymer 42 (Fig. 3a - 3c, 3c1). Dotted lines indicate that layer of polymer 42 is present inside first cell 10 (Cell1).

Figure 3b shows an expanded view of first cell 10 shown in Figure 3a. Figure 3b differs from Figure 2b in that first wall 40 and second wall 40a of Figure 3a are multilayered and through-holes 41 on first cell housing wall 40 traverse through all layers 4111, 4112 and 4113 of cell wall 40. Through-holes 41 are also in direct contact with layer of polymer 42 (Fig. 3a - 3c, 3c1). Dotted lines indicate that layer of polymer 42 is present inside the first cell 10 (Cell1). Figure 3c also differs from Figure 2c in that plate 30 having through-holes 31 is not utilized, instead, through-holes 41 are made directly on first cell housing wall 40.

Typically layer 4112 comprise a metal wherein the metal can be selected from a group comprising aluminum, steel. Typically layers 4111 and 4113 comprise a polymer wherein the polymer can be selected from a group comprising polypropylene, polyethylenterephthalat or polytetrafluoroethylene.

Layer of polymer 42 in direct contact with through-holes 41 can be selected from a group comprising polypropylene, polyethylenterephthalat or polytetrafluoroethylene and is attached at internal or external surface 43 or 44 of first wall portion 40 using a means of attachment such as a glue or welding means.

Figure 3c represents the second form of execution of means 41 for improving and promoting or facilitating the correct transmission of bidirectional messages by RF signals of data or parameter or measurement signals from first cell 10 following signals previously transmitted by first master battery management unit 20. The signals transmitted by first master battery management unit 20 were transmitted to first cell 10 either directly wirelessly or via cable 4 with couplers 28 (Figure 1b) arranged opposite each antenna (not shown) of the communication unit (COM) of first cell 10 or of second cell 10' shown in particular in Figure 1b.

Figure 3c differs from Figure 2c in that the means for improving and promoting good wireless reception and transmission of data or parameter or measurement signals are achieved by means of a cell housing directly pierced with various through-holes 41. Through-holes 41 are in direct contact with layer of polymer 42. Polymer layer 42 is impervious to liquids, double oxygen (O₂) and moisture.

The means for improving and promoting good reception of wireless radiofrequency signals with wireless communication unit 14 of first cell 10 consists in providing for the making of through-holes 41 at the location of the antenna (not shown), which may be an antenna made on a printed circuit, of communication unit 14 of first cell 10.

In a variant of the second form of execution, first and second cell housing walls 40 and 40a may be single layered.

Dotted line 3c1 1 in Figures 3c represents a line along which a section is cut so as to represent the cross section of the cell (Cell 1) and in particular the various means 41 and 42 combined in the portion wall for improving and promoting or facilitating the correct transmission of bidirectional messages.

The cross-sections of the Cell 1 along line 3c1 1 are presented in Figures 3c1 and 3c2. Whereas Figures 3c represent a top view of a cell wall 40 of first cell 10 having the means for improving and promoting or facilitating the correct transmission of bidirectional messages, Figures 3c1 and 3c2 show cross-sections of first cell 10 cut along lines 3c11 rotated by 90°.

Figure 3c1 represents the cross-section of first cell 10 shown in Figure 3c. Figure 3c1 is different from Figure 2c1 in that first cell wall 40, 40a shown in Figure 3c1 has three individual layers 4111, 4112, 4113 having through-holes 41 pierced through all layers. Figure 3c1 is different from Figure 2c1 in that plate 30 having through-holes 31 is absent. The polymer layer 42 is in direct contact with through holes 41 and is placed directly at internal surface 43 of first cell housing wall 40. Layer of polymer 42 is sandwiched between set 11 of different electronic components having a wireless communication unit 14 and internal surface 43 of the first cell housing wall 40.

Figure 3c2 represents a partial cross-section of a variant of the battery cell according to the second form of execution of means as shown in Figure 3c. Figure 3c2 is different from Figure 3c1 in that polymer layer 42 is in direct contact with through-holes 41 and is placed directly at external surface 44 of first cell housing wall 40. Set 11 of different electronic components having a wireless communication unit 14 is present directly at internal surface 43 of first cell housing wall 40.

A third form of execution of means of a battery cell for improving and promoting or facilitating the correct transmission of bidirectional messages by RF signals of data or parameter or measurement signals is explained below with reference to Figures 4a - 4c, 4c1 and 4c2.

Figure 4a shows a front side view of first cell 10 as presented in the third form of execution of means of the battery cell, which is adapted for wireless communication of bidirectional messages by RF signals of data or parameter signals with a master battery management unit. Figure 4a differs from Figure 2a in that first cell housing wall 40 and second housing wall 40a of first cell 10 is multilayered. Figure 4a differs from Figure 3a in that first wall 40 comprises means 30, 31 in addition to means 41 wherein through-holes 31 are pierced on insulating plate 30 and through-holes 41 are pierced through all layers of first housing wall 40. Through-holes 31 and 41 are aligned to enable proper transmission of wireless bidirectional messages by RF signals of data or parameter signals. Plate 30 having through-holes 31 are attached to external surface 44 of first cell housing wall 40. Through-holes 31 are in direct contact with layer of polymer 32 (Fig. 4a - 4c, 4c1, 4c2). Dotted lines indicate that through-holes 31 and 41 are located behind the layer of polymer 32 or 42 (Fig. 4a - 4c, 4c1, 4c2).

Figure 4b shows an expanded view of first cell 10 shown in Figure 4a. Figure 4b differs from Figure 2b in that first wall 40 and second wall 40a of first cell 10 are multilayered and through-holes 41 on first cell housing wall 40 traverse through all layers 4111, 4112 and 4113 of cell wall 40. Through-holes 41 are also in direct contact with layer of polymer 42 (4c1 and 4c2). Polymer 42 is not shown in Figures 4a - 4c.

Typically layer 4112 comprise a metal wherein the metal can be selected from a group comprising aluminum, steel. Typically layers 4111 and 4113 comprise a polymer wherein the polymer can be selected from a group comprising polypropylene, polyethylenterephthalat or polytetrafluoroethylene.

Layer of polymer 42 in direct contact with through-holes 41 can be selected from a group comprising polypropylene, polyethylenterephthalat or polytetrafluoroethylene and is attached at internal or external surface 43 or 44 of first housing wall 40 using a means of attachment such as a glue or welding means.

Plate 30 can be attached to external 44 or internal 43 surface of first cell housing wall 40 of first cell 10 using a means of attachment such as a glue or welding means.

Figure 4c represents a third form of execution of means 31 on plate 30 and means 41 (through-holes 41) pierced through all layers of first wall 40 for improving and promoting or facilitating the correct transmission of bidirectional messages by RF signals of data or parameter or measurement signals from first cell 10 following signals previously transmitted by first master battery management unit 20. The signals transmitted by first master battery management unit 20 were transmitted to first cell 10 either directly wirelessly or via cable 4 with couplers 28 (Figure 1b) arranged opposite each antenna (not shown) of the communication unit (COM) of first cell 10 or of second cell 10' shown in particular in Figure 1b.

Figure 4c differs from Figure 2c in that the means for improving and promoting good wireless reception and transmission of data or parameter or measurement signals are achieved by means of a cell housing directly pierced with various holes 41, in direct contact with layer of polymer 42. Polymer layer 42 is impervious to liquids, double oxygen (O₂) and moisture. Cell housing wall 40 comprises three layers as explained with reference to Figure 4a.

Figure 4c differs from Figure 3c in that the means for improving and promoting good wireless reception and transmission of data or parameter or measurement signals are achieved by combined means in which plate 30 pierced with through-holes 31 are present at the external surface 44 of first cell housing wall 40 and through-holes 41 pierced through all layers of cell wall 40. Both through-holes 31 and 41 are aligned at cell housing wall 40. Through-holes 31 and 41 are in direct contact with layer of polymer 32 and 42 respectively. Polymer layers 32 and 42 is impervious to liquids, double oxygen (O₂) and moisture

In a variant of the third form of execution, insulating wall 40 and 40a may be single layered.

Dotted line 4c11 in Figures 4c represents a line along which a section is cut so as to represent the cross section of the cell (Cell 1) and in particular the various means 31 and 41 combined in the portion wall for improving and promoting or facilitating the correct transmission of bidirectional messages.

The cross-sections of the Cell 1 along line 4c11 are presented in Figures 4c1 and 4c2. Whereas Figures 4c represent a top view of a first cell wall 40 of first cell 10 having the means for improving and promoting or facilitating the correct transmission of bidirectional messages, Figures 4c1 and 4c2 show cross-sections of first cell 10 cut along lines 4c11 rotated by 90°.

Figure 4c1 represents the cross-section of first cell 10 shown in Figure 4c. Figure 4c1 is different from Figure 2c1 in that first cell wall 40 shown in Figure 4c1 has three individual layers 4111, 4112, 4113 having through-holes 41 pierced through all layers. Polymer layer 42 is in direct contact with through holes 41 and is placed directly at internal surface 43 of first cell housing wall 40. Polymer layer 42 is sandwiched between set 11 of different electronic components having a wireless communication unit 14 and internal surface 43 of the first cell housing wall 40. Figure 4c1 is different from Figure 3c1 in that plate 30 having through holes 31 is placed at external surface 44 of first cell wall 40. Polymer layer 32 is in direct contact with through-holes 31. Said otherwise, plate 30 is sandwiched between polymer layer 32 and external surface 44 of first cell housing wall 40.

Figure 4c2 represents a partial cross-section of a variant of the battery cell according to the third form of execution of means as shown in Figure 4c. Figure 4c2 is different from Figure 4c1 in that plate 30 having through-holes 31 is placed at internal wall 43 of first housing wall 40. Polymer layer 32 in direct contact with through-holes 31 is sandwiched between plate 30 having through-holes 31 and set 11 of different electronic components having a wireless communication unit 14.

In a variant of the third form of execution, layer of polymer 42 is in direct contact with the through-holes 41 can be attached to both internal surface 43 and external surface 44 of first cell housing 40.

Layer of polymer 42 is fixed at internal surface 43 and / or external surface 44 of first cell wall 40 using a fixing means such as glue or welding means.

In another variant of the third form of execution, layer of polymer 32 or layer of polymer 42 is absent.

Layer of polymer 42 is fixed at internal surface 43 and / or external surface 44 of first cell wall 40 using a fixing means such as glue or welding means.

Insulating plate 30 may comprise a polymer and which can be selected from a group comprising polypropylene, high density polyethylene or polytetrafluoroethylene.

Layer of polymer 32 can be selected from a group comprising polypropylene, polyethylenterephthalat or polytetrafluoroethylene. Layer of polymer 32 in direct contact with through-holes 31 can be joined to plate 30 using a means of attachment such as a glue or welding means.

Through-holes 31 according to the first and third form of execution of means, and through-holes 41 according to the second and third form of execution of means typically have a diameter of 0.1 - 15 µm. Through-holes 41 are preferably 0.2 - 12 µm in diameter and more preferably 0.5 - 10 µm in diameter. Dimensions of through-holes 31 can be comparable to through-holes 41. Dimensions of through-holes 31 may also be larger compared to through-holes 41 as described in Figures 4a - 4c, 4c1 and 4c2.

Figures 2c - 4c show BMS1 Slave using dotted lines, indicating BMS1 Slave being present inside first cell 10 situated on cell wall 40. BMS1 Slave may also be outside of first cell 10.

Figure 5a represents one of the means for improving or promoting good reception of radio frequency signals generally originating from a communication unit of a master battery management system as explained with reference to Figure 2c and 4c above. These combined means are provided by means of a first plate 30' comprising longitudinal apertures 31' arranged parallel to one another and preferably evenly spaced from one another in this case vertically. A second plate 30" is provided for these combined means with longitudinal apertures 31" arranged parallel one above the other and preferably evenly spaced from one another horizontally. The first plate 30' can be mounted on the second plate 30" or vice versa to form a plate assembly. Thus the combination of the vertical longitudinal openings 31' of the first plate 30' and the horizontal longitudinal openings 31" of the second plate 30" generates openings giving access to each communication unit of each cell which has these means to improve and promote the reception of radio frequency signals. Of course, it may be possible to have direct access to an antenna of wireless communication unit 14 of each battery cell. Under these conditions, a great improvement in communication reception is obtained by these combined means. In this case it is quite plausible to add a layer of insulation through the opening in the housing structure of the first cell.

Figure 5b represents a further embodiment of means for improving or promoting good reception of radio frequency signals generally from a communication unit of a master battery management system as explained with reference to Figure 2c and 4c above. In this embodiment, provision may be made for a direct combination of the first and second plates shown in Figure 3a, or for designing a plate with apertures made therethrough of square or substantially rectangular shape and generating or making spacings between each aperture at a determined depth of plate 30 for example by a machining laser beam or other machining technique.

In a third embodiment shown in figure 5c, only one plate 30 with a single opening 31 completely passing through the plate is recommended so that at least one antenna of a wireless communication unit 14 of each cell 10 or 10' can be placed above it without any protection. However, with a single opening 31, it may also be advisable to fit a protective plate above the communication unit 14 of each cell 10, 10'. This protective plate should be made of a material that does not interfere with radio frequency signals.

Of course, for these three alternative embodiments of the combined means for improving or promoting the transmission of radio frequency signals, provision is also made for establishing near field communication via a cable 4 connected to at least one communication unit 24 of a master battery management unit 20 as explained with reference to Figures 1a or 1b above.

In the foregoing description, different embodiments may be provided for the combined means for enhancing or promoting the reception of radio frequency signals generally from a master battery management unit within the scope of the independent claims described.

## Claims

1. A battery cell (10, 10'), which comprises in a housing structure at least one slave cell management unit (slave BMS), and at least one communication unit (14) for wirelessly communicating bidirectional messages by data or parameter or measurement signals with a communication unit (24) of a master battery management system (20), **characterized in that** the cell comprises means combined in a portion of a wall of the cell housing structure and / or forming part of an externally or internally configured plate disposed on a wall facing the cell communication unit (14) for enhancing or promoting good bidirectional transmission of radio frequency signals.

2. The battery cell (10, 10'), according to claim 1, arranged to communicate with the battery via an electric cable (4), which is arranged in the battery in the vicinity of each wireless communication unit (14) of the cell or cells (10, 10'), **characterized in that** communication can be effected by wireless transmission of data or parameter or measurement signals (5), via a cable (4) connected on one side to a communication unit (24) of the master (20) and redundant master (20') battery management system and to the communication unit (14) of each cell (10, 10').

3. The battery cell (10, 10'), according to claim 1, **characterized in that** the means for improving and promoting good wireless reception and transmission of data or parameter or measurement signals are achieved by using various through-holes (41) on the housing structure in direct contact with a layer of polymer (42), wherein the layer of polymer (42) is impervious to water or moisture or double oxygen (O₂), but allow electromagnetic waves to pass through, and arranged to give access to a communication antenna of the communication unit (14) of each cell (10, 10').

4. The battery cell (10, 10'), according to claim 1, **characterized in that** the means for improving and promoting good wireless reception and transmission of data or parameter or measurement signals are achieved by means of a plate (30) pierced with various through-holes (31) in direct contact with a layer of polymer (32), wherein the layer of polymer (32) is impervious to water or moisture or double oxygen (O₂), but allow electromagnetic waves to pass through, and arranged to give access to a communication antenna of the communication unit (14) of each cell (10, 10').

5. The battery cell (10, 10') according to claim 3 or 4, **characterized in that** the various through-holes (31, 41) in direct contact with the layer of polymer (32, 42), the layer of polymer being impervious to water or moisture or double oxygen (O₂) but allow electromagnetic waves to pass through, are of identical or variable size in order to give access to a communication antenna of the communication unit (14) of each cell (10, 10').

6. The battery cell (10, 10') according to claim 1, **characterized in that** the means for improving and promoting good wireless reception and transmission of data or parameter or measurement signals are realized by means of a first plate (30') comprising longitudinal apertures (31') arranged parallel to one another and preferably regularly spaced from one another vertically and a second plate (30')' provided for these combined means with longitudinal apertures (31") arranged parallel above one another and preferably regularly spaced from one another horizontally.

7. The battery cell (10, 10') according to claim 6, **characterized in that** the second plate is fixedly mounted to the first plate.

8. The battery cell (10, 10'), according to claim 1, **characterized in that** the means for improving and promoting good wireless reception and transmission of data or parameter or measurement signals are achieved by means of one plate (30) with a single opening (31) giving direct access to a communication antenna of the communication unit (14) of each cell.

9. A battery comprising at least one battery cell (10, 10'), the cell comprising in a housing structure at least one slave cell management unit (BMS), and at least one communication unit (14) for wireless communication of data or parameter or measurement signals with a communication unit (24) of a master battery management system (20), **characterized in that** the cell comprises combined means in a portion of a wall of the cell housing structure or forming part of an externally configured plate disposed on a wall facing the cell communication unit (14) for enhancing or promoting good reception of radio frequency signals with the master battery management system (20).

10. The battery, according to claim 9, **characterized in that** the means for improving and promoting good wireless reception and transmission of data or parameter or measurement signals are realized by using various through-holes (41) on the cell housing structure in direct contact with a layer of polymer (42), wherein the layer of polymer is impervious to water or moisture or double oxygen (O₂) and / or by means of a plate (30) pierced with various through-holes (31) and arranged to give access to a communication antenna of the communication unit (14) of each of the cells (10, 10').

11. The battery according to claim 10, **characterized in that** the various through-holes (31) are of identical or variable size to give access to a communication antenna of the communication unit (14) of each cell (10, 10').

12. The battery, according to claim 9, **characterized in that** it comprises at least one cable (4) connected on one side to a communication unit (24) of a master battery management system (20) and to the communication unit (14) of each cell (10, 10') to establish communication by wireless transmission of data or parameter or measurement signals (5) with the communication unit (14) of each cell (10, 10').

13. The battery, according to claim 12, **characterized in that** it includes RF couplers (28) arranged along the cable (4) close to each cell (10, 10') of the battery, each being connected to a metal wire (27) by an open annular portion of the cable (4).

14. The battery, according to claim 9, **characterized in that** the means for improving and promoting good wireless reception and transmission of data signals or parameters or measurements are realized by means of a first plate (30') comprising longitudinal apertures (31') arranged parallel to one another and preferably regularly spaced from one another vertically and a second plate (30") provided for these combined means with longitudinal apertures (31") arranged parallel above one another and preferably regularly spaced from one another horizontally.

15. The battery according to claim 14 **characterized in that** the second plate is fixedly mounted to the first plate.

16. The battery, according to claim 9, **characterized in that** the means for improving and promoting good wireless reception and transmission of data signals or parameters or measurements are realized by means of one plate (30) with a single opening (31) giving direct access to a communication antenna of the communication unit (14) of each cell (10, 10').

17. The battery, according to claim 9, **characterized in that** a second master battery management system (20') is connected by the cable (4) in a passive state, when the first master battery management unit (20) is active, and **in that** both master battery management systems (20, 20') are adapted to receive data or parameter or measurement signals transmitted wirelessly from each cell (10, 10') of the battery each by a communication unit (24).
